# EUROPÄISCHE PATENTSCHRIFT

(11) **EP 3 161 923 B1**
(45) Veröffentlichungstag und Bekanntmachung des Hinweises auf die Patenterteilung: **13.11.2019**
(21) Anmeldenummer: 15730499.9
(22) Anmeldetag: 22.06.2015
(51) Int. Cl.: H02J 1/10, H02J 7/00, H02J 7/34, H02M 3/00

(54) **ANTRIEBSSYSTEM MIT GLEICHSPANNUNGSNETZ FÜR EIN U-BOOT**
PROPULSION SYSTEM USING DC NETWORK FOR SUBMERSIBLE VEHICLES
SYSTÈME DE PROPULSION COMPRENANT UN RÉSEAU EN COURANT CONTINU POUR SUBMERSIBLES

(30) Priorität: 27.06.2014 DE 102014109092
(43) Veröffentlichungstag der Anmeldung: 03.05.2017
(73) Patentinhaber: thyssenkrupp Marine Systems GmbH, 24143 Kiel (DE); thyssenkrupp AG, 45143 Essen (DE)
(72) Erfinder: HOLLUNG, Achim, 24211 Preetz (DE); DANNENBERG, Norbert, 23628 Krummesse (DE); SIEVERS, Tim, 24808 Jevenstedt (DE)
(74) Vertreter: thyssenkrupp Intellectual Property GmbH
(86) Internationale Anmeldenummer: PCT/EP2015/063901
(87) Internationale Veröffentlichungsnummer: WO 2015/197507

(56) Entgegenhaltungen:
- WO-A1-02/21659
- WO-A1-2006/089904
- DE-A1- 3 600 258
- DE-A1- 10 331 823
- DE-A1-102008 053 074
- DE-A1-102009 027 836
- DE-A1-102012 204 965
- DE-A1-102012 208 313
- US-A1- 2010 009 225

## Beschreibung

### Stand der Technik

Die Erfindung betrifft ein Antriebssystem für ein U-Boot aufweisend ein Gleichspannungsnetz zur Versorgung eines Antriebs des U-Boots mit elektrischer Energie und mehrere Batteriestränge, welche jeweils eine Vielzahl in Reihe geschalteter Batteriemodule aufweisen, wobei die Batteriestränge jeweils mit einer Stranganbindungseinheit verbunden sind, über welche der Batteriestrang wahlweise mit dem Gleichspannungsnetz verbindbar oder von dem Gleichspannungsnetz trennbar ist. Ferner betrifft die Erfindung ein Verfahren zum Betrieb eines derartigen Antriebssystems.

Antriebssysteme von Unterseebooten (U-Booten) weisen zur Speisung der elektrischen Antriebe der U-Boote, beispielsweise zur Speisung von Propellerantrieben, in der Regel ein Gleichspannungsnetz auf. An das Gleichspannungsnetz sind oftmals als Batterien ausgebildete Energiespeicher angebunden. Die Batterien werden üblicherweise in Batteriemodulen zusammengefasst und mehrere solcher Batteriemodule werden in Reihe zu einem Batteriestrang verschaltet. Um die zur Versorgung von Antrieben in U-Booten erforderlichen hohen Batteriekapazitäten bereitstellen zu können, ist es üblich, mehrere Batteriestränge parallel zu schalten.

Aus der DE 10 2012 204965 A1 ist ein Batteriesystem mit einer Mehrzahl an Batteriemodulen bekannt.

Aus der DE 10 2009 027836 A1 ist ein Energieübertrager für ein Batteriesystem bekannt.

Aus der US 2010/009225 A1 ist ein Brennstoffzellensystem mit einer Mehrzahl an Energieversorgungsvorrichtungen bekannt.

Ein derartiges Antriebssystem für ein U-Boot ist beispielsweise aus der DE 10 2007 053 229 A1 bekannt. Das Antriebssystem weist neben einem Gleichspannungsnetz mehrere Batteriestränge auf, die jeweils eine Vielzahl in Reihe geschalteter Batteriemodule umfassen. Die Batteriestränge sind jeweils über eine Stranganbindungseinheit mit dem Gleichspannungsnetz verbunden, über welche der Batteriestrang wahlweise mit dem Gleichspannungsnetz verbunden oder von dem Gleichspannungsnetz getrennt werden kann. Somit ist es beim Auftreten eines erhöhten Stroms in dem Batteriestrang, beispielsweise infolge eines Kurzschlusses, möglich, den Batteriestrang durch die Stranganbindungseinheit von dem Gleichspannungsnetz zu trennen.

Das bekannte Antriebssystem hat sich als Kurzschlussschutz in der Praxis durchaus bewährt. Allerdings hat sich herausgestellt, dass bei dem bekannten Antriebssystem Überladungen und/oder Tiefentladungen der Batteriestränge nicht wirksam verhindert werden können. Dies stellt sich insbesondere dann als problematisch heraus, wenn als Lithium-Ionen-Batterien ausgebildete Batteriemodule verwendet werden sollen. Durch das Überladen bzw. Tiefentladen der Batteriemodule kann es zu irreversiblen Schäden in den Batteriemodulen kommen, z. B. aufgrund von exothermen Zersetzungsreaktionen. Hierdurch werden die Lebensdauer der Batteriemodule und die Verfügbarkeit des Antriebssystems reduziert.

### Offenbarung der Erfindung

Vor diesem Hintergrund stellt sich die Erfindung die Aufgabe, die Verfügbarkeit des Antriebssystems zu erhöhen.

Bei einem Antriebssystem der eingangs genannten Art wird die Aufgabe dadurch gelöst, dass der in dem Batteriestrang fließende Strangstrom durch die Stranganbindungseinheit einstellbar ist.

Durch die Stranganbindungseinheit kann der Strom beim Laden des Batteriestrangs eingestellt werden, um einer Überladung vorzubeugen. Ferner kann der Strom beim Entladen eingestellt werden, so dass sichergestellt werden kann, dass es nicht zu einer Tiefentladung des Batteriestrangs kommt. Somit können unerwünschte Über- und/oder Tiefentladungen verhindert werden, wodurch sich die Lebensdauer der Batteriemodule und damit auch die Verfügbarkeit des Antriebssystems erhöht.

Bei dem erfindungsgemäßen Antriebssystem erfüllt die Stranganbindungseinheit eine Doppelfunktion. Durch die Stranganbindungseinheit kann der Batteriestrang wahlweise an das Gleichspannungsnetz zugeschaltet oder von dem Gleichspannungsnetz getrennt werden und der Strangstrom des zugeschalteten Batteriestrangs kann eingestellt werden.

Erfindungsgemäß weißt die Stranganbindungseinheit einen Spannungswandler auf. Der Spannungswandler kann derart zwischen das Gleichspannungsnetz und den Batteriestrang geschaltet sein, dass eine auf der Seite des Gleichspannungsnetzes anliegende Netzspannung in eine auf der Seite des Batteriestrangs anliegende Strangspannung gewandelt werden kann und umgekehrt. Der Spannungswandler ist erfindungsgemäß bidirektional ausgebildet, so dass wahlweise Energie von dem Gleichspannungsnetz in den Batteriestrang oder von dem Batteriestrang in das Gleichspannungsnetz transportiert werden kann. Über den bidirektionalen Spannungswandler können Lade- und Entladevorgänge des mit der Stranganbindungseinheit verbundenen Batteriestrangs geregelt werden. Bevorzugt ist der Spannungswandler als Gleichspannungswandler (auch DC/DC-Wandler oder Gleichstromsteller) ausgebildet. Über einen Gleichspannungswandler kann eine an einem Anschluss des Gleichspannungswandlers anliegende Gleichspannung in eine betragsmäßig veränderte Gleichspannung an einem zweiten Anschluss des Gleichspannungswandlers umgesetzt werden.

Eine vorteilhafte Ausgestaltung sieht vor, dass der Spannungswandler derart ausgebildet ist, dass eine Netzspannung des Gleichspannungsnetzes wahlweise in eine höhere oder in eine niedrigere Strangspannung des Batteriestrangs wandelbar ist. Durch wahlweises Einstellen der an den Batteriemodulen anliegenden Strangspannung kann eine Regelung der Spannungen an den einzelnen Batteriemodulen erfolgen. Beispielsweise kann es ermöglicht werden, die Entladeströme einzelner Stränge bei gleicher Gesamtleistung der Batterie zu beeinflussen. Falls das Antriebssystem zusätzlich eine mit dem Gleichspannungsnetz verbundene Brennstoffzelle aufweist, kann durch Regelung der Netzspannung die Einstellung des Arbeitspunkts vereinfacht werden.

Besonders vorteilhaft ist es, wenn der Spannungswandler derart ausgebildet ist, dass sowohl die Netzspannung des Spannungsnetzes als auch die Strangspannung des Batteriestrangs einstellbar sind.

Eine vorteilhafte Ausgestaltung sieht vor, dass die Stranganbindungseinheit derart ausgebildet ist, dass der Batteriestrang von dem Gleichspannungsnetz getrennt werden kann. Dies bringt den Vorteil mit sich, dass ein Stromfluss zwischen dem Gleichspannungsnetz und dem Batteriestrang unterbunden werden kann. Erfindungsgemäß ist der Batteriestrang galvanisch von dem Gleichspannungsnetz trennbar. Eine galvanische Trennung von dem Gleichspannungsnetz kann beispielsweise erforderlich sein, um Instandhaltungsmaßnahmen an dem Batteriestrang durchzuführen.

Bevorzugt weist die Stranganbindungseinheit einen in Serie mit dem Gleichspannungswandler geschaltete Schalteinrichtung zur galvanischen Trennung des Batteriestrangs von dem Gleichspannungsnetz auf. Die Schalteinrichtung kann beispielsweise einen Leistungsschalter aufweisen.

Als vorteilhaft hat sich ferner eine Ausgestaltung erwiesen, bei welcher die Stranganbindungseinheit ein gemeinsames Gehäuse für den Spannungswandler und die Schalteinrichtung aufweist. Durch die Anordnung in einem gemeinsamen Gehäuse können Kabelwege zwischen Spannungswandler und Schalteinrichtung kurz gehalten werden. Zudem wird somit eine kompakte Ausgestaltung der Stranganbindungseinheit ermöglicht, was vor dem Hintergrund des beschränkten Raumangebots in U-Booten vorteilhaft ist. Besonders vorteilhaft ist eine Ausgestaltung der Stranganbindungseinheit nach Art eines Nachrüstteils, so dass die Stranganbindungseinheit in vorhandene Antriebssysteme integriert werden kann.

Vorteilhaft ist es, wenn die Batteriemodule Lithium-Ionen-Batterien aufweisen. Lithium-Ionen-Batterien weisen im Vergleich zu herkömmlichen Bleibatterien eine höhere Energiedichte auf und sind wartungsfrei, bringen aber auch den Nachteil einer erhöhten Anfälligkeit gegenüber Tiefentladungen und Überladungen mit sich. Durch den Spannungswandler der Stranganbindungseinheit können Lithium-Ionen-Batterien vor Tiefentladungen und Überladungen geschützt werden. Somit ist es möglich, die Vorteile von Lithium-Ionen-Batterien in dem Antriebsystem zu nutzen.

Bevorzugt sind die Stranganbindungseinheiten des Antriebssystems unabhängig voneinander steuerbar, so dass in verschiedenen Batteriesträngen unterschiedliche Strangspannungen und/oder Strangströme eingestellt werden können. Hierdurch können zwischen den einzelnen Batteriesträngen fließende Ausgleichsströme verringert werden. Solche Ausgleichsströme können sich beispielsweise aufgrund unterschiedlicher Ladezustände verschiedener Batteriestränge ergeben. Durch eine unabhängige Steuerung der Stranganbindungseinheiten, insbesondere der Spannungswandler der Stranganbindungseinheiten, ist es erfindungsgemäß möglich, die Strangspannungen und /oder Strangströme der Batteriestränge derart einzustellen, dass Ausgleichströme unterdrückt werden.

Eine vorteilhafte Ausgestaltung sieht vor, dass die Stranganbindungseinheiten über eine Antriebssteuereinheit steuerbar sind. Die Antriebssteuereinheit kann eine zentrale Steuereinheit sein, durch welche alle Stranganbindungseinheiten gesteuert werden können. Besonders vorteilhaft ist es, wenn die Antriebssteuereinheit eine Bedienerschnittstelle aufweist, über welche ein Bediener Befehle zur Steuerung der Stranganbindungseinheiten geben kann. Beispielsweise kann vorgesehen sein, dass einzelne Batteriestränge über die Antriebssteuereinheit, insbesondere über die Bedienerschnittstelle der Antriebssteuereinheit, wahlweise zuschaltbar oder abschaltbar sind.

In diesem Zusammenhang hat es sich als besonders vorteilhaft herausgestellt, wenn die Stranganbindungseinheiten jeweils über eine dem Strang zugeordnete Strangsteuereinheit steuerbar ist, welche gegenüber der Antriebssteuereinheit Vorrang hat. Durch den Vorrang der Strangsteuereinheit kann verhindert werden, dass Befehle der Strangsteuereinheit aufgrund anderslautender Befehle der Antriebssteuereinheit in der Stranganbindungseinheit nicht umgesetzt werden können. Die Strangsteuereinheit kann beispielsweise als Batterie-Management-System ausgebildet sein, welches aufgrund von Messungen von Batteriekenngrößen einen Arbeitspunkt des Batteriestrangs einstellt. Optional kann vorgesehen sein, dass das Trennen bzw. Verbinden des Batteriestrangs von dem Gleichspannungsnetz durch die Strangsteuereinheit steuerbar ist. Dies bringt den Vorteil mit sich, dass beim Auftreten unerwünschter Betriebszustände der Batteriemodule, wie beispielsweise eines Kurzschlusses, einer Überhitzung oder eines unerwünschten Ladezustands, der Batteriestrang von dem Gleichspannungsnetz getrennt werden kann, um die Batteriemodule vor weiterem Schaden zu schützen und/oder den Betrieb des Antriebssystems aufrechtzuerhalten. Vorteilhafterweise ist durch die Strangsteuereinheit ein Freigabesignal erzeugbar, welches die Steuerung der Stranganbindungseinheit durch die Antriebssteuereinheit freigibt.

Bevorzugt ist eine Ausgestaltung, bei welcher mit dem Gleichspannungsnetz eine Brennstoffzelle verbunden ist. Über die Brennstoffzelle kann das Antriebssystem mit Energie versorgt werden.

Bei einem Verfahren der eingangs genannten Art trägt es zur Lösung der Aufgabe bei, wenn der in dem Batteriestrang fließende Strangstrom durch die Stranganbindungseinheit eingestellt wird. Es ergeben sich dieselben Vorteile wie sie bereits im Zusammenhang mit der erfindungsgemäßen Vorrichtung beschrieben worden sind.

Eine vorteilhafte Ausgestaltung des Verfahrens sieht vor, dass die Stranganbindungseinheit, insbesondere ein Spannungswandler der Strangstromeinheit, den Strangstrom begrenzt, wenn der Strangstrom einen vorgegeben ersten Grenzwert überschreitet. Der Spannungswandler kann derart gesteuert werden, dass der Strangstrom - egal ob in Richtung des Gleichspannungsnetzes oder in Richtung des Batteriestrangs fließend - begrenzt wird, sofern ein erster Grenzwert überschritten wird. Hierdurch können Stromerhöhungen wirksam begrenzt werden, die durch Ausgleichsströme zwischen verschiedenen Batteriesträngen oder durch Batteriemoduldefekte bedingt sind. Zudem kann auch der Anstieg von Kurzschlussströmen gemindert werden.

In diesem Zusammenhang ist es bevorzugt, dass die Stranganbindungseinheit den Batteriestrang von dem Gleichspannungsnetz trennt, wenn der Strangstrom einen vorgegebenen zweiten Grenzwert überschreitet, der betragsmäßig größer ist als der erste Grenzwert. Durch ein derartiges gestaffeltes Verfahren, können solche Strangströme, die nicht durch den Spannungswandler begrenzt werden können, abgeschaltet werden.

Bei dem Verfahren können alternativ oder zusätzlich auch die im Zusammenhang mit dem erfindungsgemäßen Antriebssystem beschriebenen Merkmale Verwendung finden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

### Kurze Beschreibung der Figuren

Die **Figur 1** zeigt ein Antriebssystem für ein U-Boot gemäß der Erfindung in einem schematischen Blockschaltbild.
Die **Figur 2** zeigt ein einen Batteriestrang in einem schematischen Blockschaltbild.
Die **Figur 3** zeigt eine erste Ausgestaltung einer Stranganbindungseinheit in einem schematischen Blockschaltbild.
Die **Figur 4** zeigt eine zweite Ausgestaltung einer Stranganbindungseinheit in einem schematischen Blockschaltbild.
Die **Figur 5** zeigt ein Schaltbild eines bidirektionalen Spannungswandlers.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

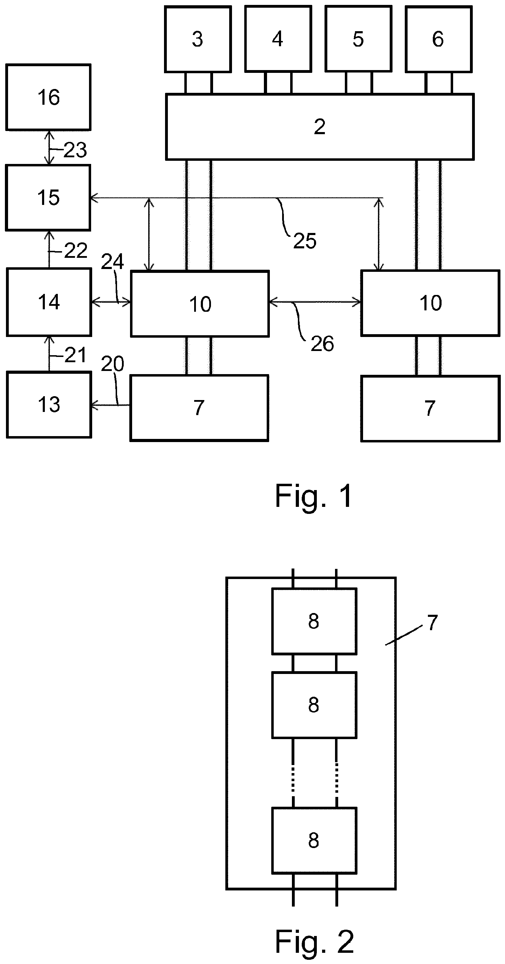

In der **Figur 1** ist ein Antriebssystem 1 eines U-Boots dargestellt. Das Antriebssystem weist einen beispielsweise als Propellerantrieb ausgebildeten Antrieb 3 auf, über welchen das U-Boot angetrieben werden kann. Der Antrieb 3 ist mit einem Gleichspannungsnetz 2 verbunden, welches auch als Fahrnetz bezeichnet wird. Über das Gleichspannungsnetz 2 kann der Antrieb 3 mit elektrischer Energie versorgt werden.

Die zum Antrieb des U-Boots erforderliche Energie kann verschiedenen Energiequellen 4, 5, 6 entnommen werden, die nachfolgend beschrieben werden sollen. Eine erste Energiequelle ist als Generator 4, beispielsweise als Dieselgenerator, ausgebildet. Ferner ist eine zweite Energiequelle vorgesehen, die als Brennstoffzelle 5 ausgebildet ist. Brennstoffzellen bringen den Vorteil mit sich, dass sie geräuschlos betrieben werden können, weshalb sie bevorzugt bei Schleichfahrten des U-Boots betrieben werden. Das Antriebssystem gemäß dem Ausführungsbeispiel weist ferner einen Ladeanschluss 6 auf, über welchen eine externe Energiequelle mit dem Antriebssystem 1 verbindbar ist. Über den Ladenanschluss kann das Antriebssystem beispielsweise mit einem externen Spannungsnetz verbunden werden, während das U-Boot in einem Stützpunkt liegt.

Optional kann an dem Gleichspannungsnetz 2 ein Bordnetz des U-Boots angebunden sein, über welches weitere elektrische Verbraucher versorgt werden können.

Ferner ist in dem Antriebssystem 1 ein Energiespeicher vorgesehen, der mehrere Batteriestränge 7 aufweist. Beispielsweise können 25-50 Batteriestränge vorgesehen sein. Die Batteriestränge 7 sind aus einer Vielzahl in Reihe geschalteter Batteriemodule 8 gebildet, vgl. **Figur 2****.** Die Batteriemodule 8 weisen mehrere Batteriezellen auf, die beispielsweise als Lithium-Ionen-Batteriezellen ausgebildet sein können. Wie der **Figur 1** weiter zu entnehmen ist, sind die Batteriestränge 7 jeweils über eine Stranganbindungseinheit 10 mit dem Gleichspannungsnetz 2 verbunden.

Bei dem Antriebssystem 1 übernehmen die Stranganbindungseinheiten 10 eine Doppelfunktion. Durch die Stranganbindungseinheiten 10 können die Batteriestränge 7 wahlweise mit dem Gleichspannungsnetz 2 galvanisch verbunden oder von dem Gleichspannungsnetz 2 galvanisch getrennt werden und der jeweilige Strangstrom der Batteriestränge 7 kann eingestellt werden. Durch die Stranganbindungseinheit 10 kann der Strom beim Laden des Batteriestrangs eingestellt werden, um einer Überladung vorzubeugen. Ferner kann der Strom beim Entladen eingestellt werden, so dass sichergestellt werden kann, dass es nicht zu einer Tiefentladung des Batteriestrangs kommt. Somit können unerwünschte Über- und/oder Tiefentladungen verhindert werden, wodurch sich die Lebensdauer der Batteriemodule 8 und damit auch die Verfügbarkeit des Antriebssystems 1 erhöht.

Die Stranganbindungseinheiten 10 des Antriebssystems 1 sind unabhängig voneinander steuerbar, so dass in verschiedenen Batteriesträngen 7 unterschiedliche Strangspannungen und/oder Strangströme eingestellt werden können. Jeder Batteriestrang 7 ist über Leitungen 20 mit einer dem Batteriestrang 7 zugeordneten Sensorik 13 verbunden, über welche z :B. die Spannung der einzelnen Batteriemodule 8 erfasst werden kann. Die Sensorik 13 ist über eine Leitung 21 mit einer Strangsteuereinheit 14 verbunden, welcher die von der Sensorik 13 erfassten Messwerte zugeführt werden. Für jeden Batteriestrang 7 bzw. jede Stranganbindungseinheit 10 ist eine eigene Strangsteuereinheit 14 vorgesehen. Gemäß dem Ausführungsbeispiel ist die Strangsteuereinheit 14 als Batterie-Management-System ausgebildet, welches aufgrund der von der Sensorik 13 erfassten Messwerte einen Arbeitspunkt des Batteriestrangs einstellt. Zudem ist auch das Trennen bzw. Verbinden des Batteriestrangs 7 von dem Gleichspannungsnetz 2 durch die Strangsteuereinheit 14 steuerbar ist. Hierdurch kann beim Auftreten unerwünschter Betriebszustände der Batteriemodule 8, wie beispielsweise eines Kurzschlusses, einer Überhitzung oder eines unerwünschten Ladezustands, der Batteriestrang 7 von dem Gleichspannungsnetz 2 getrennt werden, um die Batteriemodule 8 vor weiterem Schaden zu schützen und/oder den Betrieb des Antriebssystems 1 aufrechtzuerhalten.

Ferner ist in dem Antriebssystem 1 eine zentrale Antriebssteuereinheit 15 vorgesehen, welche über Leitungen 23 mit den Strangsteuereinheiten 14 für die einzelnen Batteriestränge 7 sowie über Leitungen 25 mit den Stranganbindungseinheiten 10 verbunden ist. Über die Antriebssteuereinheit 15 können sämtliche Stranganbindungseinheiten 10 des Antriebssystems 1 gesteuert werden. Um Probleme mit der gleichzeitigen Ansteuerung der Stranganbindungseinheiten 10 durch die Strangsteuereinheiten 14 und die zentrale Antriebssteuereinheit 15 zu vermeiden, ist eine Vorrangsregelung implementiert. Die der jeweiligen Stranganbindungseinheit 10 zugeordnete Strangsteuereinheit 14 hat bei der Steuerung der Stranganbindungseinheit 10 immer Vorrang gegenüber der Antriebssteuereinheit 15. Hierzu ist durch die Strangsteuereinheiten 14 jeweils ein Freigabesignal für die zugeordnete Stranganbindungseinheit 10 erzeugbar. Liegt das Freigabesignal an der Stranganbindungseinheit 10 nicht vor, so wird der Batteriestrang 7 durch die Stranganbindungseinheit 10 von dem Gleichspannungsnetz 2 getrennt. Erzeugt die Strangsteuereinheit 14 hingegen ein Freigabesignal, so wird die Steuerung der Stranganbindungseinheit 10 durch die Antriebssteuereinheit15 freigegeben, so dass das Anschalten und Trennen des Batteriestrangs 7 durch die Antriebssteuereinheit 15 beeinflusst werden kann.

Die Antriebssteuereinheit 15 weist eine Bedienerschnittstelle auf, über welche ein Bediener Befehle zur Steuerung der Stranganbindungseinheiten 10 geben kann. Beispielsweise kann vorgesehen sein, dass einzelne Batteriestränge 10 über die Bedienerschnittstelle der Antriebssteuereinheit 15 wahlweise zugeschaltet oder abgeschaltet werden können. Ein Abschalten einzelner Stränge kann beispielsweise zu Wartungs- oder Instandhaltungszwecken erforderlich sein.

Optional kann vorgesehen sein, dass die Stranganbindungseinheiten 10 derart ausgebildet sind, dass sie miteinander kommunizieren können. Hierzu können die Stranganbindungseinheiten 10 über Leitungen 26 verbunden sein.

Das Antriebssystem 1 kann derart betrieben werden, dass die in den Batteriesträngen 7 fließenden Strangströme jeweils durch die Stranganbindungseinheiten 10 eingestellt werden.

Zur Begrenzung der Strangströme kommt bevorzugt ein Verfahren zum Einsatz, bei welchem ein erster Grenzwert sowie ein zweiter Grenzwert für den Strom vorgegeben sind, wobei der zweite Grenzwert betragsmäßig größer als der erste Grenzwert ist. Der Strangstrom wird insbesondere kontinuierlich gemessen. Sofern der Strangstrom den ersten Grenzwert überschreitet, wird der Strangstrom durch die Stranganbindungseinheit 10, begrenzt. Sollte der Strangstrom im Folgenden trotz der Begrenzung durch die Stranganbindungseinheit 10 betragsmäßig ansteigen, so wird beim Überschreiten des zweiten Grenzwerts der Batteriestrang 7 durch die Stranganbindungseinheit 10 von dem Gleichspannungsnetz 2 getrennt.

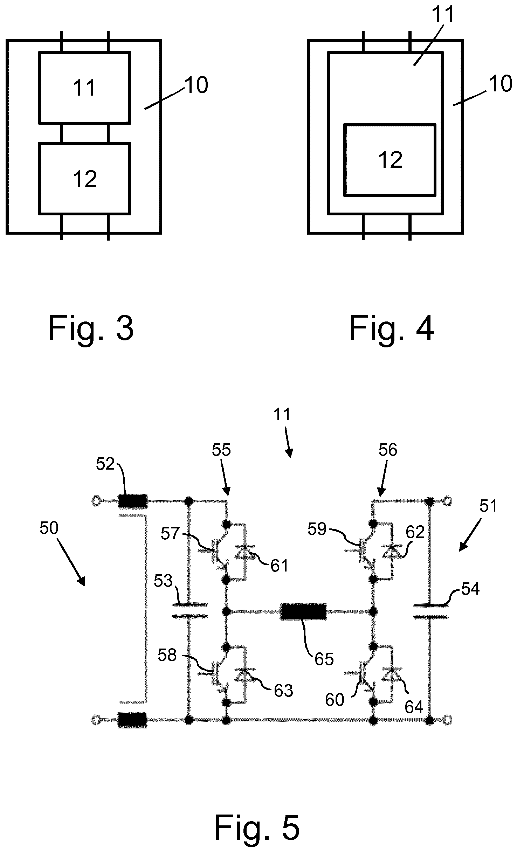

In der **Figur 3** ist eine erste Ausgestaltung einer Stranganbindungseinheit 10 gemäß der Erfindung dargestellt. In einer ersten erfindungsgemäßen Ausführungsform weist die Stranganbindungseinheit 10 weist einen bidirektionalen Spannungswandler 11 sowie eine in Reihe mit dem Spannungswandler 11 geschaltete Schalteinrichtung 12 auf, über welche der Batteriestrang 7 galvanisch von dem Gleichspannungsnetz 2 getrennt werden kann.

Hierzu weist die Stranganbindungseinheit 10 einen bidirektionalen Spannungswandler 11 auf, über welchen die auf der Seite des Gleichspannungsnetzes 2 anliegende Netzspannung in eine auf der Seite des Batteriestrangs 7 anliegende Strangspannung gewandelt werden kann und umgekehrt. Da der Spannungswandler 11 bidirektional ausgebildet ist, kann wahlweise Energie von dem Gleichspannungsnetz 2 in den Batteriestrang 7 oder von dem Batteriestrang 7 in das Gleichspannungsnetz 2 transportiert werden. Der Spannungswandler 11 bringt den Vorteil mit sich, dass Lade- und Entladevorgänge des Batteriestrangs 7 geregelt werden können. Insbesondere ist es möglich, Ladeströme beim Laden des Batteriestrangs 7 zu einzustellen und/oder zu begrenzen, um einer Überladung der Batteriemodule 8 vorzubeugen. Ferner kann der Strom beim Entladen eingestellt und/oder begrenzt werden, so dass sichergestellt werden kann, dass es nicht zu einer Tiefentladung der Batteriemodule 8 kommt. Zudem kann ein infolge eines Kurzschlusses erhöhter der Strom durch den Spannungswandler 11 begrenzt werden.

Ferner ist in der Stranganbindungseinheit 10 gemäß Fig. 3 eine Schalteinrichtung 12 vorgesehen welche beispielsweise einen Leistungsschalter aufweisen kann. Gemäß dem Ausführungsbeispiel ist der Spannungswandler 11 unmittelbar mit dem Gleichspannungsnetz 2 verbunden und die Schalteinrichtung 12 unmittelbar mit dem Batteriestrang 7. Alternativ kann der Spannungswandler 11 unmittelbar mit dem Batteriestrang 7 und die Schalteinrichtung 12 mit dem Gleichspannungsnetz 2 verbunden sein. Bevorzugt kann der Spannungswandler 11 die Spannung des Gleichspannungsnetzes 2 entsprechend einer Sollwertvorgabe einstellen.

Spannungswandler 11 und Schalteinrichtung 12 sind in einem gemeinsamen Gehäuse angeordnet, so dass Kabelwege zwischen dem Spannungswandler 11 und der Schalteinrichtung 12 kurz gehalten werden können.

Die **Figur 4** zeigt eine zweite Ausgestaltung einer Stranganbindungseinheit 10 gemäß der Erfindung. In einer zweiten erfindungsgemäßen Ausführungsform ist die Stranganbindungseinheit 10 derart ausgebildet, dass der Spannungswandler 11 eine Schalteinrichtung 12 aufweist, über welche der Batteriestrang 7 galvanisch von dem Gleichspannungsnetz 2 getrennt werden kann.

In der **Figur 5** ist ein Spannungswandler 11 dargestellt, welcher in einer vorstehend beschriebenen Stranganbindungseinheit 10 verwendet werden kann. Der Spannungswandler 11 ist derart ausgebildet, dass eine Netzspannung des Gleichspannungsnetzes 2 wahlweise in eine höhere oder in eine niedrigere Strangspannung des Batteriestrangs 7 wandelbar ist. Ferner ist durch den Spannungswandler 11 sowohl die Netzspannung des Spannungsnetzes 2 als auch die Strangspannung des Batteriestrangs 11 einstellbar. Insofern kann der Spannungswandler 11 in beiden Richtungen wahlweise als Hochsetzsteller und/oder als Tiefsetzsteller betrieben werden.

Der Spannungswandler 11 weist einen ersten Anschluss 50 auf, welcher mit dem Gleichspannungsnetz 2 verbunden werden kann und einen zweiten Anschluss 51, welcher mit dem Batteriestrang 7 verbunden werden kann. Mit dem Anschluss 50 ist ein als stromkompensierte Drossel ausgebildetes Filter 52 verbunden, über welches Störemissionen gedämpft werden können.

Der Spannungswandler 11 weist einen symmetrischen Aufbau auf. Parallel zu dem ersten Anschluss 50 ist ein erster Kondensator 53 geschaltet. Parallel zu dem zweiten Anschluss 51 ist ein zweiter Kondensator 54 vorgesehen. In einer Parallelschaltung zu dem ersten Kondensator 53 ist ein erster Schalterzweig 56 angeordnet. Parallel zu dem zweiten Kondensator 54 ist ein zweiter Schalterzweig 55 vorgesehen. Die Schalterzweige 55, 56 sind identisch ausgebildet. Die Schalterzweige 55, 56 weisen jeweils einen ersten Schalter 57, 59 auf, der in Reihe mit einem zweiten Schalter 58, 60 angeordnet ist. Parallel zu den ersten Schaltern 57, 59 und zweiten Schaltern 58, 60 sind jeweils Dioden 61, 62, 63, 64 angeordnet. Die Schalterzweige 55, 56 weisen jeweils einen zwischen dem ersten Schalter 57, 59 und dem zweiten Schalter 58, 60 angeordneten Abgriff auf. Die Abgriffe der beiden Schalterzweige 55, 56 sind über eine Induktivität 65 miteinander verbunden.

Die Schalter können als Halbleiterschalter, insbesondere als MOSFET, IGBT oder Gate-Turn-Off-Thyristor, ausgebildet sein.

Im Folgenden sollen verschiedene Zustände beschrieben werden, in welchen der Spannungswandler 11 betrieben werden kann. Hierbei wird der Zustand eines Schalters 57, 58, 59, 60, in welchem der Schalter 57, 58, 59, 60 einen elektrischen Strom führen kann, als "geschlossen" bezeichnet. Ein als IGBT ausgebildeter Schalter ist in diesem Zustand leitend. Der Zustand eines Schalters 57, 58, 59, 60, in welchem der Schalter 57, 58, 59, 60 isoliert, also keinen Strom führen kann, wird als "geöffnet" bezeichnet. Ein als IGBT ausgebildeter Schalter ist sperrend.

In einem ersten Betriebszustand des Spannungswandlers 11 können Kurzschlussströme und/oder Entladeströme eingestellt und begrenzt werden. Der Leistungsfluss erfolgt von dem Batteriestrang 7 am zweiten Anschluss 51 zu dem Gleichspannungsnetz 2 an dem ersten Anschluss 50. In dem ersten Betriebszustand ist der erste Schalter 57 des ersten Schalterzweigs 55 geöffnet und der zweite Schalter 58 des ersten Schalterzweigs 55 geöffnet, so dass die Ausgangseite der Induktivität 65 über die erste Freilaufdiode 61 des ersten Schalterzweigs 55 mit der am Anschluss 50 anliegenden Netzspannung des Gleichspannungsnetzes 2 verbunden ist. Der zweite Schalter 60 des zweiten Schalterzweigs 56 bleibt geöffnet, während der erste Schalter 59 des zweiten Schalterzweigs 56 alternierend geöffnet und geschlossen wird, um die Eingangsseite der Induktivität 65 abwechselnd mit der Strangspannung des Batteriestrangs 7 und über die Diode 64 mit Masse zu verbinden. Insofern wird die Funktion eines Tiefsetzstellers in Richtung des Gleichspannungsnetzes 2 bereitgestellt.

In einem zweiten Betriebszustand des Spannungswandlers 11 können Ladeströme eingestellt und/oder begrenzt werden. Der Leistungsfluss erfolgt von dem Gleichspannungsnetz 2 am ersten Anschluss 50 zu dem Batteriestrang 7 am zweiten Anschluss 51. In dem zweiten Betriebszustand ist der erste Schalter 59 des zweiten Schalterzweigs 56 geöffnet und der zweite Schalter 60 des zweiten Schalterzweigs 56 geöffnet, so dass die Ausgangseite der Induktivität 65 über die erste Freilaufdiode 62 des zweiten Schalterzweigs 56 mit der am Anschluss 51 anliegenden Strangspannung des Batteriestrangs 7 verbunden ist. Der zweite Schalter 58 des ersten Schalterzweigs 55 bleibt geöffnet, während der erste Schalter 57 des ersten Schalterzweigs 55 alternierend geöffnet und geschlossen wird, um die Eingangsseite der Induktivität 65 abwechselnd mit der Netzspannung des Gleichspannungsnetzes 2 und über die Diode 63 mit Masse zu verbinden. Insofern wird die Funktion eines Tiefsetzstellers in Richtung des Batteriestrangs 7 bereitgestellt.

In einem dritten Betriebszustand des Spannungswandlers 11 kann die Netzspannung des Gleichspannungsnetzes 2 hochgesetzt werden, beispielsweise um den Betrieb der Brennstoffzelle 5 zu stützen. Der Leistungsfluss erfolgt von dem Gleichspannungsnetz 2 am ersten Anschluss 50 zu dem Batteriestrang 7 am zweiten Anschluss 51.

In dem dritten Betriebszustand ist der erste Schalter 59 des zweiten Schalterzweigs 56 geschlossen und der zweite Schalter 60 des zweiten Schalterzweigs 56 geöffnet, so dass die Ausgangseite der Induktivität 65 mit der am Anschluss 51 anliegenden Strangspannung des Batteriestrangs 7 verbunden ist. Der erste Schalter 57des ersten Schalterzweigs 55 bleibt geöffnet, während der zweite Schalter 58 des ersten Schalterzweigs 55 alternierend geöffnet und geschlossen wird, um die Eingangsseite der Induktivität 65 abwechselnd mit Masse und über die Diode 61 mit der Netzspannung des Gleichspannungsnetzes 2 zu verbinden. Insofern wird die Funktion eines Hochsetzstellers in Richtung des Batteriestrangs 7 bereitgestellt.

Das vorstehend beschriebene Antriebssystem 1 für ein U-Boot umfasst ein Gleichspannungsnetz 2 zur Versorgung eines Antriebs 3 des U-Boots mit elektrischer Energie und mehrere Batteriestränge 7, welche jeweils eine Vielzahl in Reihe geschalteter Batteriemodule 8 aufweisen, wobei die Batteriestränge 7 jeweils mit einer Stranganbindungseinheit 10 verbunden sind, über die der Batteriestrang 7 wahlweise mit dem Gleichspannungsnetz 2 verbunden oder von dem Gleichspannungsnetz 2 getrennt werden kann und wobei der in dem Batteriestrang 7 fließende Strangstrom durch die Stranganbindungseinheit 10 einstellbar ist. Hierdurch können unerwünschte Über- und/oder Tiefentladungen der Batteriestränge 7 verhindert werden, wodurch sich die Lebensdauer der Batteriestränge 7 und damit auch die Verfügbarkeit des Antriebssystems 1 erhöht.

Zudem ergeben sich die folgenden Vorteile: Kurzschlussströme eines Batteriestrangs 7 können durch Regelung des Strangstroms begrenzt werden. Die Kurzschlussströme können abgeschaltet werden. Es ist möglich, die Batteriestränge 7 galvanisch freizuschalten. Batteriestränge 7 können betriebsmäßig zu und abgeschaltet werden. Der Strangstrom schlechter Batteriestränge 7 kann beim Laden und/oder Entladen begrenzt werden, um Über- und Tiefentladung zu verhindern und damit die maximal mögliche Energie aus den Batteriesträngen zur Verfügung zu stellen. Mögliche Ausgleichsströme beim Zusammenschalten ungleich geladener Batteriestränge 7 können geregelt und begrenzt werden. Die Spannung der Batteriestränge 7 kann erhöht und/oder geregelt werden, um einen optimalen Arbeitspunkt mit der Brennstoffzelle 5 einzustellen. Bei einem Antriebssystem 1 mit Fahrtstufen können Ausgleichsströme begrenzt werden und Batteriestränge 7 nach Parallelschaltung auf eine gemeinsame Spannung ausgeregelt werden.

### Bezugszeichenliste

- 1: Antriebssystem
- 2: Gleichspannungsnetz
- 3: Antrieb
- 4: Generator
- 5: Brennstoffzelle
- 6: Ladeanschluss
- 7: Batteriestrang
- 8: Batteriemodul
- 10: Stranganbindungseinheit
- 11: Spannungswandler
- 12: Schalteinrichtung
- 13: Sensor
- 14: Strangsteuereinheit
- 15: Antriebssteuereinheit
- 16: Bootsautomation
- 20, 21, 22, 23, 24, 25, 26: Leitung
- 50, 51: Anschluss
- 52: Filter
- 53, 54: Kondensator
- 55, 56: Schalterzweig
- 57, 58, 59, 60: Schalter
- 61, 62, 63, 64: Diode
- 65: Induktivität

## Patentansprüche

1. Antriebssystem für ein U-Boot aufweisend ein Gleichspannungsnetz (2) zur Versorgung eines Antriebs (3) des U-Boots mit elektrischer Energie und mehrere Batteriestränge (7), welche jeweils eine Vielzahl in Reihe geschalteter Batteriemodule (8) aufweisen, wobei die Batteriestränge (7) jeweils mit einer Stranganbindungseinheit (10) verbunden sind, über welche der Batteriestrang (7) wahlweise mit dem Gleichspannungsnetz (2) verbindbar oder von dem Gleichspannungsnetz (2) trennbar ist, **dadurch gekennzeichnet,**
**dass** der in dem Batteriestrang (7) fließende Strangstrom durch die Stranganbindungseinheit (10) einstellbar ist, welche einen bidirektionalen Spannungswandler (11) und eine Schalteinrichtung (12) zur galvanischen Trennung des Batteriestrangs (7) von dem Gleichspannungsnetz (2) aufweist, wobei die Schalteinrichtung (12) entweder in Reihe mit dem Spannungswandler (11) geschaltet ist oder der Spannungswandler (11) die Schalteinrichtung (12) aufweist, wobei die Ausgleichströme zwischen Batteriesträngen unterdrückt werden.

2. Antriebssystem nach Anspruch 1, **dadurch gekennzeichnet, dass** der Spannungswandler (11) derart ausgebildet ist, dass eine Netzspannung des Gleichspannungsnetzes (2) wahlweise in eine höhere oder in eine niedrigere Strangspannung des Batteriestrangs (7) wandelbar ist.

3. Antriebssystem nach einem der vorhergehenden Ansprüche, **dadurch gekennzeichnet, dass** der Spannungswandler (11) derart ausgebildet ist, dass sowohl die Netzspannung des Spannungsnetzes (2) als auch die Strangspannung des Batteriestrangs (7) einstellbar sind.

4. Antriebssystem nach einem der vorhergehenden Ansprüche, **dadurch gekennzeichnet, dass** die Stranganbindungseinheit (10) derart ausgebildet ist, dass der Batteriestrang (7) von dem Gleichspannungsnetz (2) getrennt werden kann.

5. Antriebssystem nach einem der vorhergehenden Ansprüche, **dadurch gekennzeichnet, dass** der Spannungswandler (11) als Gleichspannungswandler ausgebildet ist.

6. Antriebssystem nach einem der vorhergehenden Ansprüche, **dadurch gekennzeichnet, dass** die Stranganbindungseinheit (10) ein gemeinsames Gehäuse für den Spannungswandler (11) und die Schalteinrichtung (12) aufweist.

7. Antriebssystem nach einem der vorhergehenden Ansprüche, **dadurch gekennzeichnet, dass** die Batteriemodule (8) Lithium-Ionen-Batterien aufweisen.

8. Antriebssystem nach einem der vorhergehenden Ansprüche, **dadurch gekennzeichnet, dass** die Stranganbindungseinheiten (10) unabhängig voneinander steuerbar sind.

9. Antriebssystem nach einem der vorhergehenden Ansprüche, **dadurch gekennzeichnet, dass** die Stranganbindungseinheiten (10) über eine Antriebssteuereinheit (15) steuerbar sind.

10. Antriebssystem nach Anspruch 9, **dadurch gekennzeichnet, dass** die Stranganbindungseinheiten (10) jeweils über eine dem Strang zugeordnete Strangsteuereinheit (14) steuerbar ist, welche gegenüber der Antriebssteuereinheit (15) Vorrang hat.

11. Antriebssystem nach einem der vorhergehenden Ansprüche, **dadurch gekennzeichnet, dass** mit dem Gleichspannungsnetz (2) eine Brennstoffzelle (5) verbunden ist.

12. Verfahren zum Betrieb eines Antriebssystems (1) eines U-Boots aufweisend ein Gleichspannungsnetz (2) zur Versorgung eines Antriebs (3) des U-Boots mit elektrischer Energie und mehrere Batteriestränge (7), welche jeweils eine Vielzahl in Reihe geschalteter Batteriemodule (8) aufweisen, wobei die Batteriestränge (7) jeweils mit einer Stranganbindungseinheit (10) verbunden sind, über welche der Batteriestrang (7) wahlweise mit dem Gleichspannungsnetz (2) verbunden oder von dem Gleichspannungsnetz (2) getrennt wird, **dadurch gekennzeichnet,**
**dass** der in dem Batteriestrang (7) fließende Strangstrom durch die Stranganbindungseinheit (10) eingestellt wird, welche einen bidirektionalen Spannungswandler (11) und eine Schalteinrichtung (12) zur galvanischen Trennung des Batteriestrangs (7) von dem Gleichspannungsnetz (2) aufweist, wobei die Schalteinrichtung (12) entweder in Reihe mit dem Spannungswandler (11) geschaltet ist oder der Spannungswandler (11) die Schalteinrichtung (12) aufweist, wobei die Ausgleichströme zwischen Batteriesträngen unterdrückt werden.

13. Verfahren nach Anspruch 12, **dadurch gekennzeichnet, dass** die Stranganbindungseinheit (10), insbesondere ein Spannungswandler (11) der Stranganbindungseinheit (10), den Strangstrom begrenzt, wenn der Betrag des Strangstroms einen vorgegeben ersten Grenzwert überschreitet.

14. Verfahren nach Anspruch 13, **dadurch gekennzeichnet, dass** die Stranganbindungseinheit (10) den Batteriestrang von dem Gleichspannungsnetz (2) trennt, wenn der Betrag des Strangstroms einen vorgegebenen zweiten Grenzwert überschreitet, der betragsmäßig größer ist als der erste Grenzwert.

## Claims

1. Propulsion system for a submersible vehicle having a DC network (2) for supplying a propulsion unit (3) of the submersible vehicle with electrical energy and a plurality of battery strings (7) which each have a multiplicity of battery modules (8) connected in series, wherein the battery strings (7) are each connected to a string-connecting unit (10) via which the battery string (7) can optionally be connected to the DC network (2) or disconnected from the DC network (2), **characterized in that** the string current flowing in the battery string (7) can be adjusted by means of the string-connecting unit (10) which has a bidirectional voltage converter (11) and a switching device (12) for galvanically disconnecting the battery string (7) from the DC network (2), wherein the switching device (12) is either connected in series with the voltage converter (11) or the voltage converter (11) has the switching device (12), wherein the compensating currents between battery strings are suppressed.

2. Propulsion system according to Claim 1, **characterized in that** the voltage converter (11) is embodied in such a way that a network voltage of the DC network (2) can optionally be converted into a higher or into a lower string voltage of the battery string (7) .

3. Propulsion system according to one of the preceding claims, **characterized in that** the voltage converter (11) is embodied in such a way that both the network voltage of the voltage network (2) and the string voltage of the battery string (7) can be adjusted.

4. Propulsion system according to one of the preceding claims, **characterized in that** the string-connecting unit (10) is embodied in such a way that the battery string (7) can be disconnected from the DC network (2) .

5. Propulsion system according to one of the preceding claims, **characterized in that** the voltage converter (11) is embodied as a DC voltage converter.

6. Propulsion system according to one of the preceding claims, **characterized in that** the string-connecting unit (10) has a common housing for the voltage converter (11) and the switching device (12).

7. Propulsion system according to one of the preceding claims, **characterized in that** the battery modules (8) have lithium-ion batteries.

8. Propulsion system according to one of the preceding claims, **characterized in that** the string-connecting units (10) can be controlled independently of one another.

9. Propulsion system according to one of the preceding claims, **characterized in that** the string-connecting units (10) can be controlled by a propulsion control unit (15) .

10. Propulsion system according to Claim 9, **characterized in that** the string-connecting units (10) can each be controlled by means of a string control unit (14) which is assigned to the string and which has priority over the propulsion control unit (15).

11. Propulsion system according to one of the preceding claims, **characterized in that** a fuel cell (5) is connected to the DC network (2).

12. Method for operating a propulsion system of a submersible vehicle having a DC network (2) for supplying a propulsion unit (3) of the submersible vehicle with electrical energy and a plurality of battery strings (7) which each have a multiplicity of battery modules (8) connected in series, wherein the battery string (7) are each connected to a string-connecting unit (10) via which the battery string (7) is optionally connected to the DC network (2) or disconnected from the DC network (2), **characterized in that** the string current flowing in the battery string (7) is adjusted by means of the string-connecting unit (10) which has a bidirectional voltage converter (11) and a switching device (12) for galvanically disconnecting the battery string (7) from the DC network (2), wherein the switching device (12) is either connected in series with the voltage converter (11) or the voltage converter (11) exhibits the switching device (12), wherein the compensating currents between battery strings are suppressed.

13. Method according to Claim 12, **characterized in that** the string-connecting unit (10), in particular a voltage converter (11) of the string-connecting unit (10), limits the string current if the absolute value of the string current exceeds a predefined first limiting value.

14. Method according to Claim 13, **characterized in that** the string-connecting unit (10) disconnects the battery string from the DC network (2) if the absolute value of the string current exceeds a predefined second limiting value which is higher in absolute terms than the first limiting value.

## Revendications

1. Système de propulsion pour un sous-marin possédant un réseau de tension continue (2) destiné à alimenter un mécanisme propulseur (3) du sous-marin avec de l'énergie électrique et plusieurs branches de batteries (7), lesquelles possèdent respectivement une pluralité de modules de batterie (8) branchés en série, les branches de batteries (7) étant respectivement reliées à une unité de connexion de branche (10) par le biais de laquelle la branche de batteries (7) peut, sélectivement, être reliée au réseau de tension continue (2) ou être séparée du réseau de tension continue (2), **caractérisé en ce que** le courant de branche qui s'écoule dans la branche de batteries (7) peut être réglé par le biais de l'unité de connexion de branche (10), laquelle possède un convertisseur de tension (11) bidirectionnel et un dispositif de commutation (12) destiné à la séparation galvanique de la branche de batteries (7) du réseau de tension continue (2), soit le dispositif de commutation (12) étant branché en série avec le convertisseur de tension (11), soit le convertisseur de tension (11) possédant le dispositif de commutation (12), les courants d'équilibrage entre les branches de batteries étant inhibés.

2. Système de propulsion selon la revendication 1, **caractérisé en ce que** le convertisseur de tension (11) est configuré de telle sorte qu'une tension de réseau du réseau de tension continue (2) peut être convertie sélectivement en une tension de branche plus élevée ou plus basse de la branche de batteries (7).

3. Système de propulsion selon l'une des revendications précédentes, **caractérisé en ce que** le convertisseur de tension (11) est configuré de telle sorte que la tension de réseau du réseau de tension (2) ainsi que la tension de branche de la branche de batteries (7) sont toutes deux réglables.

4. Système de propulsion selon l'une des revendications précédentes, **caractérisé en ce que** l'unité de connexion de branche (10) est configurée de telle sorte que la branche de batteries (7) peut être séparée du réseau de tension continue (2).

5. Système de propulsion selon l'une des revendications précédentes, **caractérisé en ce que** le convertisseur de tension (11) est réalisé sous la forme d'un convertisseur de tension continue.

6. Système de propulsion selon l'une des revendications précédentes, **caractérisé en ce que** l'unité de connexion de branche (10) possède un boîtier commun pour le convertisseur de tension (11) et le dispositif de commutation (12).

7. Système de propulsion selon l'une des revendications précédentes, **caractérisé en ce que** les modules de batterie (8) possèdent des batteries aux ions de lithium.

8. Système de propulsion selon l'une des revendications précédentes, **caractérisé en ce que** les unités de connexion de branche (10) peuvent être commandées indépendamment les unes des autres.

9. Système de propulsion selon l'une des revendications précédentes, **caractérisé en ce que** les unités de connexion de branche (10) peuvent être commandées par le biais d'une unité de commande de mécanisme propulseur (15).

10. Système de propulsion selon la revendication 9, **caractérisé en ce que** les unités de connexion de branche (10) peuvent respectivement être commandées par le biais d'une unité de commande de branche (14) associée à la branche, laquelle est prioritaire sur l'unité de commande de mécanisme propulseur (15).

11. Système de propulsion selon l'une des revendications précédentes, **caractérisé en ce qu'**une pile à combustible (5) est reliée au réseau de tension continue (2) .

12. Procédé de fonctionnement d'un système de propulsion (1) pour un sous-marin possédant un réseau de tension continue (2) destiné à alimenter un mécanisme propulseur (3) du sous-marin avec de l'énergie électrique et plusieurs branches de batteries (7), lesquelles possèdent respectivement une pluralité de modules de batterie (8) branchés en série, les branches de batteries (7) étant respectivement reliées à une unité de connexion de branche (10) par le biais de laquelle la branche de batteries (7) peut, sélectivement, être reliée au réseau de tension continue (2) ou être séparée du réseau de tension continue (2), **caractérisé en ce que** le courant de branche qui s'écoule dans la branche de batteries (7) est réglé par le biais de l'unité de connexion de branche (10), laquelle possède un convertisseur de tension (11) bidirectionnel et un dispositif de commutation (12) destiné à la séparation galvanique de la branche de batteries (7) du réseau de tension continue (2), soit le dispositif de commutation (12) étant branché en série avec le convertisseur de tension (11), soit le convertisseur de tension (11) possédant le dispositif de commutation (12), les courants d'équilibrage entre les branches de batteries étant inhibés.

13. Procédé selon la revendication 12, **caractérisé en ce que** l'unité de connexion de branche (10), notamment un convertisseur de tension (11) de l'unité de connexion de branche (10), limite le courant de branche lorsque la valeur du courant de branche dépasse une première valeur limite prédéfinie.

14. Procédé selon la revendication 13, **caractérisé en ce que** l'unité de connexion de branche (10) sépare la branche de batteries du réseau de tension continue (2) lorsque la valeur du courant de branche dépasse une deuxième valeur limite prédéfinie dont la valeur est supérieure à celle de la première valeur limite.
